Europäisches Patentamt

European Patent Office

Office européen des brevets

(11) Publication number: **0 425 405 A2**

# EUROPEAN PATENT APPLICATION

(21) Application number: 90480121.4

(22) Date of filing: 29.08.90

(51) Int. Cl.5: **G06F 15/24**

(30) Priority: **23.10.89 US 425614**

(43) Date of publication of application:
**02.05.91 Bulletin 91/18**

(84) Designated Contracting States:
**DE FR GB**

(71) Applicant: **International Business Machines Corporation**
**Old Orchard Road**
**Armonk, N.Y. 10504(US)**

(72) Inventor: **James, Frank L.**
**14 South Walk**
**Middleton-on-Sea, West Sussex**
**PO227RW(GB)**
Inventor: **Natarajan, Bharath**
**2170 Meadowind Lane**
**Marietta, GA 30062(GB)**
Inventor: **Phillips, Joseph S. Jr.**
**2053 Surrey Lane**
**Jonesboro, GA 30236(GB)**

(74) Representative: **Bonneau, Gérard**
**Compagnie IBM France Département de**
**Propriété Intellectuelle**
**F-06610 La Gaude(FR)**

(54) An automated customer order promising and confirming method.

(57) A computer based customer order promising and confirming method system automatically interfaces to a production planning system to provide an integrated approach to the front-end planning process. The process estimates projected order completion based on customer requested orders. First, the customer requested orders are received and the requirements (as specified by the orders) are entered in the planning system. Next, a check is made to see if the requirement(s) can be satisfied by either unallocated inventory or unallocated scheduled production. If the results of this check meet the requirement(s), the information is provided for order-promising pending order confirmation. If the results on the other hand do not meet the requirement(s), the process then utilizes the logic of a material requirements planning system (MRP) to explode the requirements and generate a statement of time phased dependent requirements. The logic of the MRP is used to simulate the process of procurement and/or fabrication of the necessary components to calculate possible delivery dates. The effect of releasing new orders/requirements is further simulated by capacity/resource planning logic to verify if production capacity is available to meet delivery dates requested by the customer or suggested by MRP. Following the simulation process, the system provides the order processing operator with clear information on best available date(s) if requested, whether the customer specified date(s) can be met, and if customer specified date(s) cannot be met, the best available date(s).

EP 0 425 405 A2

FIG.1

**RECEIVE CHANGE/ NEW ORDER** (10)

**ENTER REQUIREMENTS** (20)

**NET AGAINST INV.** (30)

**IS INV. AVAIL** (40)

**ALLOCATE TO CUSTOMER** (50)

**INFORM CUSTOMER BASED ON SHIP SCHED.** (60)

**IS REQUEST FOR CUST DATE OR BEST AVAIL** (70)

**IS QTY AVAIL IN PLANNED PRODN.** (80)

**DETERMINE ITEM REQMT. USING MRP & VERIFY WITH CRP** (90)

**CAN CUSTOMER DATE BE MET** (100)

**ESTABLISH PRODUCTION AVAILABILITY** (110)

**ARRIVE AT BEST AVAILABLE DATE** (120)

# AN AUTOMATED CUSTOMER ORDER PROMISING AND CONFIRMING METHOD

The present invention generally relates to a computer based customer order promising and confirming method. More particularly, it applies to a method which automatically interfaces an order promising system to a production planning system and provides an integrated approach to the front-end planning process. The front end planning process begins when orders are received from customers and continues until the time production is planned and confirmed.

The process of designing, developing and manufacturing a new product, or making major changes to existing products, presents many challenges to product managers and manufacturing managers to bring a product to market for the least cost, within schedule, while maintaining product quality. In today's highly competitive industries, product managers and manufacturing managers require information to address many problems that arise because of the complexity of new products and the complexity of world-wide production and the changing nature of competition. The requirement that products be manufactured for the least possible cost is important in all industries. Of all the costs associated with selling products and services, none is more important than the cost of customer service. When customers require items in varying quantities in different time periods, the manufacturer should be able to provide meaningful confirmation dates to satisfy those orders received from customers. The customer promised dates should include · the pre-analysis of manufacturing capability such that manufacturing operations are not over burdened, thereby increasing the manufacturing cost.

Many manufacturing systems available in today's market provide the capability to make changes to customer orders based on allocations and "available to commit" quantities but do not provide capabilities to check capacity before committing to customers if inventory is not readily available. When customers' order quantities exceed the "available to commit" quantities, current systems do not provide any means to compare the requested orders With available capacity on a dynamic scale. For example, IBM Corporation's product COPICS (Communications Oriented Production Information and Control System) has the capability to make allocations to new customer orders based on "available to commit" values.

The prior art, including IBM's COPICS and other similar systems, consists of several related applications. These applications include Customer Order Servicing, Master Production Schedule Planning, Materials Requirements Planning (MRP), Capacity Requirements Planning (CRP) and Engineering and Production Data Control.

Master Production Schedule Planning maintains the production schedules for each item to be manufactured by a company or facility. Together, for all end items, production schedules represent the overall manufacuiring program for a plant. The major functions typically provided by the Master Production Schedule Planning application are:

a) Estimate demand on company resources,

b) Provide information to determine the best production schedule for each item,

c) Maintain a master production schedule as changes occur, and

d) Provide a simulation or "what-if" capability to test changes in the master production schedule or changes in capacity.

Master Schedule Production Planning is the primary input into Material Requirements Planning, assuring that adequate lead time will be available to order materials and that capacity will be available to manufacture the planned production.

Engineering and Production Data Control provides the creation, organization, maintenance and communication of the basic engineering records within a company. These include:

a) Bills of material, or "parts lists", which describe the components that make up a product, and

b) Manufacturing routings, or "process sheets", which describe the sequence of operations performed in the fabrication/assembly of a product, and the resource used in each step of the process. The various elements comprising the manufacturing lead time are included for each operation.

Engineering and Production Data Control creates and manages much of the basic data used by other application areas, including:

a) Material Requirements Planning which uses bill of material records for planning and suggesting orders for item requirements, and

b) Capacity Requirements Planning which uses routings to measure planned utilization of production resources.

The basic functions of Material Requirements Planning (MRP) are as follows:

a) Determine gross requirements - Changes to the master production schedule are entered into Material Requirements Planning as gross requirements. A change may result from allocating customer orders. Allocation is the assignment of available or planned inventory to an order. In customer order servicing, as customer orders are entered, available inventory and planned

3

production are allocated against them.

b) Calculate net requirements - After gross requirements have been determined and summarized, net requirements are automatically calculated for each item. The object of this calculation is to establish whether or not the gross requirements are covered (matched) by available inventory. Available inventory is considered the quantity on-hand plus the quantity on-order minus safety stock, if any.

c) Apply safety stock and/or safety lead time - Safety stock is typically maintained for items with independent (master production schedule) demand and for selected items with dependent (calculated versus forecast) demand.

d) Lot size, considering order quantity - MRP creates planned orders to cover net requirements. The size of the planned order may be identical to the requirement for a given period or may be a calculated economic order quantity. Planned orders include shop orders, purchase orders and interplant orders.

e) Schedule release of planned orders - A planned order created by MRP represents no commitment until further action is taken. When it becomes desirable, the planned order may be designated as a "firm" planned order. This means the date(s) and quantities cannot be changed without approval. The due date of the planned order is the date of the first net requirement the order covers minus an allowance, if necessary, for safety lead time. Calculation of the release date of the planned order is done by substraction of the purchasing or production lead time from the due date.

f) Explode end item requirements throughout the product structure - Gross requirements for an item that result from the explosion of a higher-level assembly (bill of materials) are dependent demand requirements. The explosion process involves a planned order and the bill of material for the item. In continuous (or "real-time") net change MRP processing, each individual change in the gross requirements for the item is immediately processed; that is, requirements are netted and planned orders adjusted, as required.

The function of Capacity Requirements Planning (CRP) is to determine the workload for each element of production resource by time period. This workload is also expressed in terms of capacity requirements and production resources are also referred to as work centers, work stations, etc. The output from Capacity Requirements Planning is expressed in "load profiles" calculated to show utilization of production resources according to the planned order schedule supplied by MRP.

CRP determines the estimated start date for each operation to be performed in the production process. This is done by starting from the due date of the order and subtracting the various lead time allowances as identified in the routing and process data. This process is also called "back scheduling". If calculated start dates are determined to be "past due", CRP attempts to use compression and overlapping algorithms and other techniques to correct the problem. If these techniques are unsuccessful, CRP reports which dates must be revised to make the planned production schedule realistic.

Customer Order Servicing is the link between the customer and manufacturing. Manufacturing systems provide Customer Order Servicing with the necessary information concerning item availability. As orders are accepted and shipped, the system stores information on orders, customers and products for management reporting. Customer Order Servicing provides the following functions:

a) Order analysis and entry,
b) Determining availability for future delivery,
c) Order control,
d) Handling customer inquiries,
e) Shipping, and
f) Evaluating order servicing performance.

For a more detailed discussion, reference may be had to pp. 128-130 in IBM's COPICS Customer Order Servicing Manual (pub. SB21-2634-1), program number 5785-DCP. Competing products marketed by MSA, Inc., Cullinet and others have similar capabilities but do not provide any means to provide automated order promising and confirming. The basic drawback is the inability to analyze the orders received with the capacity available to manufacture on a dynamic basis.

What is needed is an automated system that automatically estimates the projected completion dates of customer orders considering current manufacturing status and using simulation and scheduling rules for analysis. Such a system should take into account the impact of scheduling the requested customer orders with orders already in process. Based on the results of these operations, the system should automatically provide realistic order completion dates for customer order confirmation. This system would provide additional intelligence to the order entry operator that is not currently available from existing systems.

It is therefore an object of the present invention to provide an easy to use, user-interactive system that accepts new customer orders and changes to existing customer orders which automatically provides estimates of projected order completion dates.

It is another object of the invention to provide a computer implemented system that specifically addresses the needs of order promising and confirmation for new orders and changes to existing orders.

According to the invention, the Automated Customer Order Promising and Confirming System facilitates effective order confirming policies. It allows a user to enter a new customer order or change to an existing customer order on-line, with two options:

1) To simulate the consequences of entry of a new order or change to an existing order, and

2) To confirm entry of a new order or change to an existing order and initiate release of purchasing and production orders immediately.

Where the input of an order is preceded by a process in the company that creates the bill of material (or part of it), this process can either be manual (in the engineering department) or a result of an automatic configuration process. Where the bill of material exists in advance, the entry of the order simply consists of entering the necessary information for product, quantity and options information, etc.

Materials Requirements Planning (MRP) is an application known in the prior art. MRP is a key function required for this invention. If some orders are inserted for simulation in another (on-line or batch) MRP run, these should be neglected during the execution. It may be necessary to run a net change MRP (batch) before the on-line MRP in order to increase the accuracy of the on-line MRP. The process performed by the invention in making the estimate of projected order completion based on customer requested orders (and changes) includes the following steps:

1. Receive the customer requested orders (and/or changes).

2. Enter requirements (as specified by the orders) in the planning system.

3. Check to see if the requirement(s) can be satisfied by either of the following:

a. Unallocated inventory, and b. Unallocated scheduled production.

4. If results of step (3) meet the requirement(s), the information is provided for order promising pending order confirmation.

5. If results of step (3) do not meet the requirement(s), the process continues.

6. Utilize the logic of MRP to explode the requirements and generate a statement of time phased dependent requirements.

7. Utilize the logic of MRP to simulate the process of procurement and/or fabrication of the necessary components to calculate possible delivery dates.

8. Identify lead time reductions necessary to meet requested delivery dates.

9. The effect of releasing new orders/requirements is further simulated by capacity/resource planning logic to verify if production capacity is available to meet delivery dates requested by the customer or suggested by MRP. The detailed process, including the ability to establish completion under a given set of management parameters, is described in application S.N. 07/127,334.

10. Following the simulation process, the system will provide the order processing operator with clear information on:

a. Best available date(s) if requested, b. Whether the customer specified date(s) can be met, and c. If customer specified date(s) cannot be met, best available date(s).

11. Following the order processing review of system information, the order processing person will have the option of entering the new order(s) or change(s).

12. Following the order/change entry, the system will update affected data and schedules.

The foregoing and other objects, aspects and advantages will be better understood from the following detailed description of a preferred embodiment of the invention with reference to the drawings, in which:

Figure 1 is a high level flow chart showing the logical decision process of the Automated Order Promising System according to the invention;

Figure 2 is an illustration of a menu screen that a user would use to invoke system analysis; and

Figures 3, 4 and 5, taken together, are a detailed flow chart showing the logic of the system shown in Figure 1.

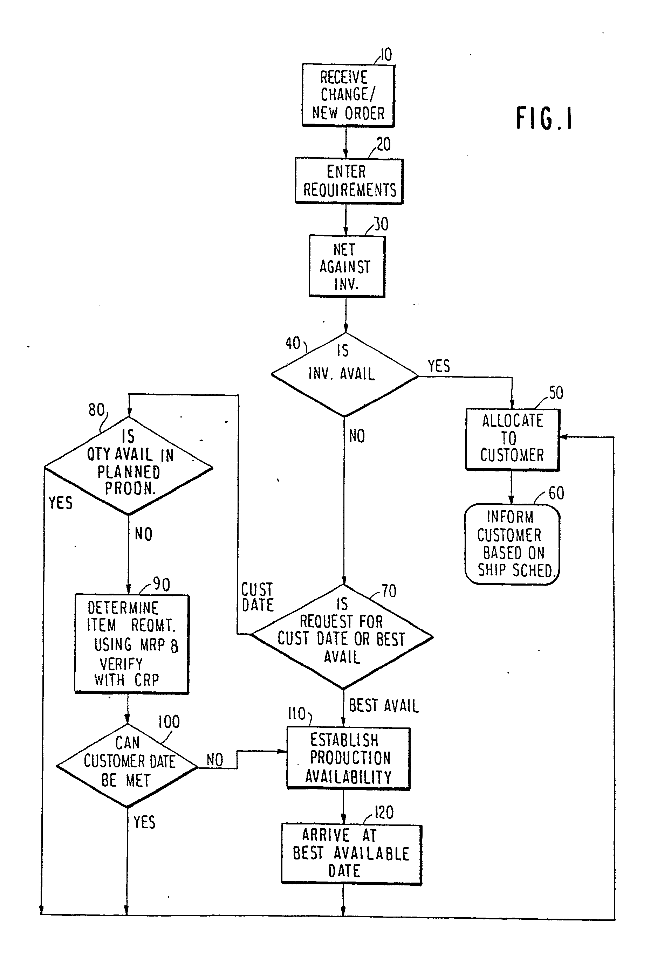

Referring now to the drawings, and more particularly to Figure 1, there is a flow chart showing the processes that take place in a typical manufacturing environment from the time the orders are received and the logic to arrive at the capability to promise and confirm planned shipping dates based on capacity constraints and product availability. Blocks 10, 20 and 30 are functions currently performed by the COS (Customer Order Servicing) module within COPICS where customer orders are received, entered and checked for inventory availability, respectively. In decision block 40, a test is made to verify that the inventory is available or on-hand. If inventory is available, the inventory is allocated to the customer in function block 50, and the customer is advised accordingly, as indicated by operation block 60. This function is also described in the COS module within COPICS .

If the inventory is not available as determined by the test in decision block 40, then the user of the system is prompted in decision block 70 to input a request for the customer specified date or a "best available" date. Assuming first that the customer specified date is input, a test is made in decision block 80 to see if the required quantity is available in the planned production process. If so, the process goes directly to block 50 to allocate that inventory to the customer; otherwise, in function block 90, a detailed MRP explosion process is invoked to define the detailed requirements, and the requirements are verified with a CRP module for user production capacity. Next, a test is made in decision block 100 to determine if the customer date can be met. If so, the process goes directly to function block 50 to allocate inventory to the customer; otherwise, the process goes to function block 110.

The other route to function block 110 is from decision block 70 when the user requests the "best available" date. In either case, production availability is analyzed at function block 110 to arrive at a "best available" date which is displayed to the user in function block 120. The process then goes to function block 50 to allocate inventory based on this "best available" date.

The real essence of this invention deals with the capability to commit to a customer 'when inventory is not on-hand or readily available. This is described in blocks 70 through 120. Block 70 deals with establishing if the request is for making an analysis based on a requested customer shipping date or on a best available date. Simple capacity checking as described by a CRP module in the prior art is done initially. This may be adequate for many customers, but it is a static analysis. A more thorough analysis is described further below which takes into account simulation and order release and dispatching rules.

The following describes a static analysis using CRP and backward scheduling. Note, however, that during execution, the normal MRP steps are followed, but only the customer order requirements are exploded, not the requirements coming from the netting process.

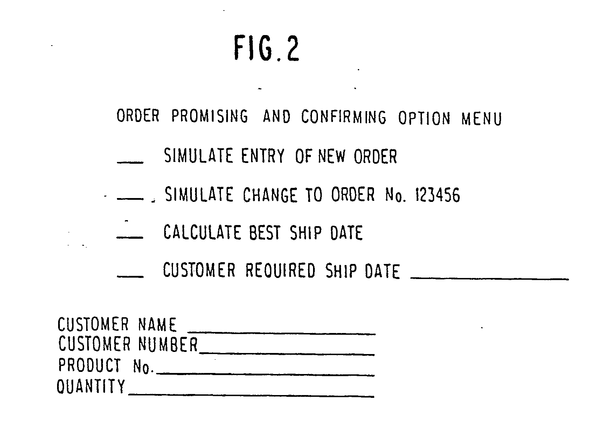

After the user enters the customer and item information, a menu selection is made to go to the Order Promising and Confirming menu screen, shown in Figure 2. The system will automatically go to this screen. On this menu, a selection is made to identify whether simulation of a new order or change to an existing order is required. Selection is also made of which promise date is required. The customer-supplied required date can be entered, or the system can be requested to supply the best available date. After these menu selections or entries are made by the user, the system proceeds to compare the new requirements (item, quantity and date) to existing data.

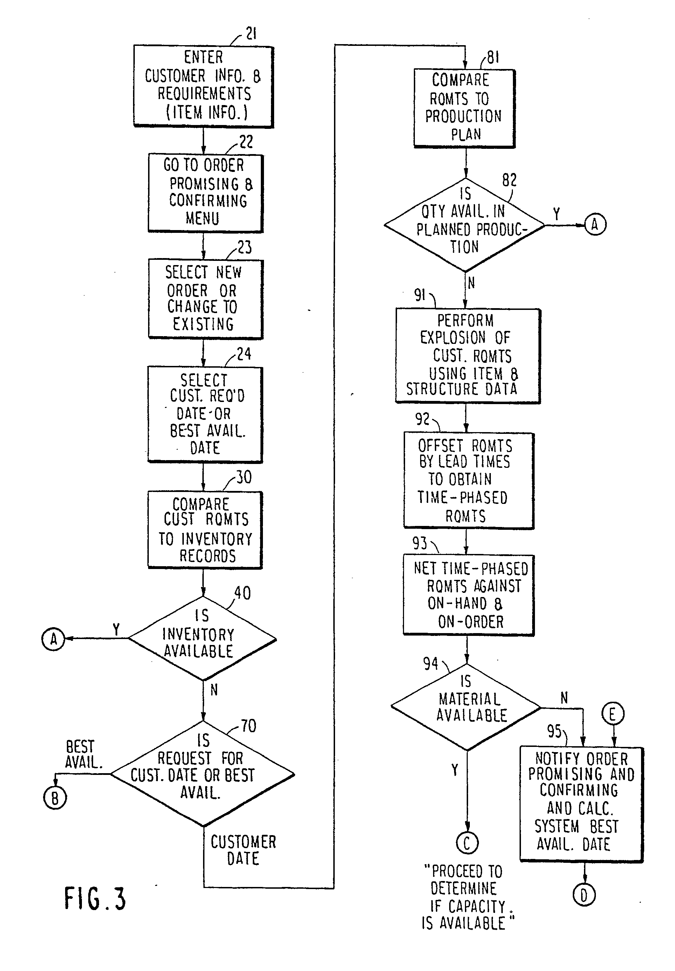

This process is further described in Figure 3. More specifically, the user of the system enters customer information and requirements in function block 21. Then, in function block 22, the order promising and confirming menu is displayed, and in function block 23, the user selects a new order or change to an existing order. In function block 24, the user selects either a customer required date or a best available date.

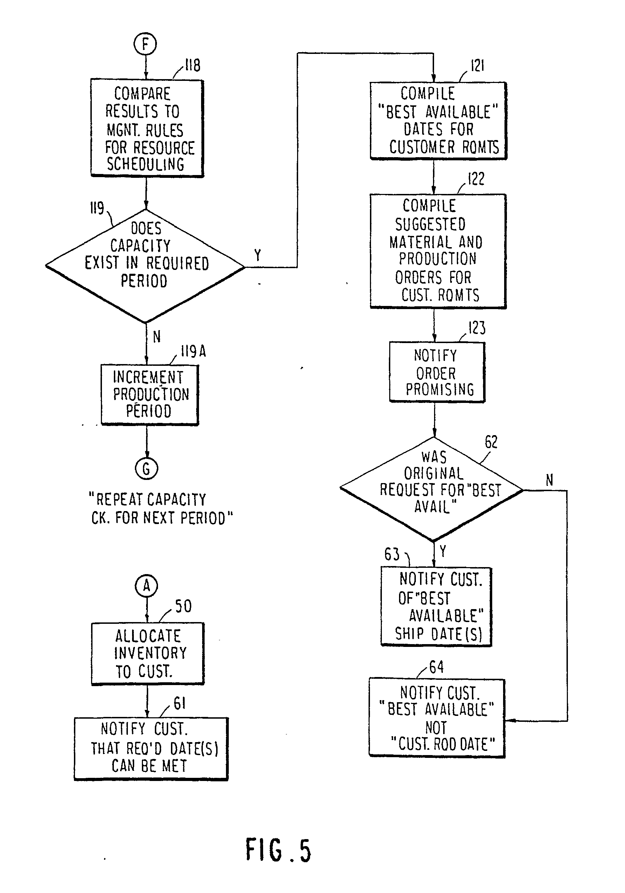

The system then examines inventory records stored in a computer data base to determine if the requested item(s) are available. This is shown in Figures 1 and 3 in function blocks 30 and 40. Maintenance of current inventory data records in the data base is known in the prior art and, therefore, will not be discussed here. If the requested item(s) are available, the system will notify the user as part of the step of allocating inventory to the customer shown in Figures 1 and 5 in function block 50. In Figure 5, after inventory has been allocated to the customer in block 50, the customer is notified that the required dates can be met in function block 61.

If the requested item(s) are not available from inventory, the system will examine the records in the computer data base which contain the current production plan to determine if the item(s) are available on the customer's required date, if requested. Maintenance of current production plan data records in the data base is also known in the prior art and will not be discussed here. If the requested date is satisfied, the system will notify the user. These steps are shown in Figure 3 at function block 81 and decision block 82 and again in Figure 5 at function blocks 50 and 61.

If the requested quantity of an item is not available from planned production as determined in decision block 81, the system proceeds to function block 91. Establishment of product structure and item data used in the next steps are known in prior art Material Requirements Planning (MRP) systems. The MRP system logic performs the process of explosion of product structure (bill of material) data to determine a full statement of requirements, which are offset by their respective lead times.

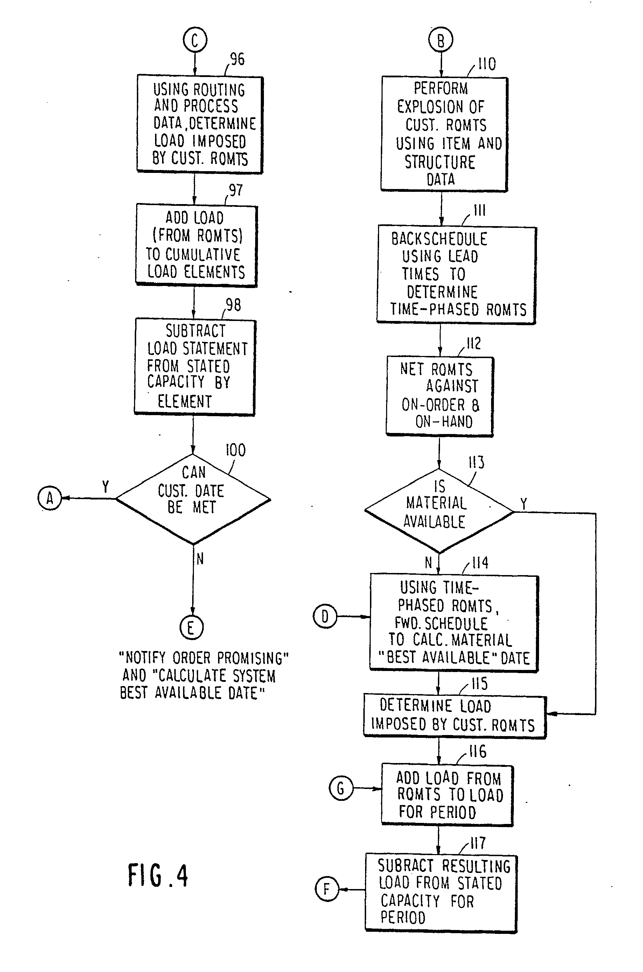

Following the process shown in Figure 3 at function blocks 91 and 92 of explosion and offsetting, the logic of the MRP system is also used to net the requirements statement created by the previous step against the material which is expected to be available. The netting process is a feature of the MRP system and is shown in Figure 3 by function block 93. A test is then made in decision block 94 to determine if material is available for the customer requirements and, if so, the system proceeds to determine if capacity is available in Figure 4 beginning at function block 96. Determination of user production capacity in the next steps is known in prior art Capacity Requirements Planning (CRP) systems. The CRP system logic performs the process of using routing and process data tocdetermine the load to user production imposed by customer requirements. The CRP system then adds this load to cumulative load requirements in function block 97, and the sum is subtracted from a predefined user production capacity in function block 98. At this point, a test is made to determine if the customer specified date can be made in decision block 100. If so, the process goes to function block 50 in Figure 5; otherwise, the process loops back to function block 95 in Figure 3.

When the initial request at decision block 70 in Figures 1 and 3 is based on the customer s required date, the lead times of required items identified in the netting process are back scheduled through the product structure levels, using the customer's required date as the end date, to determine if there is sufficient time to enter replenishment orders to produce the item(s) by the customer's required date. If this process is not successful in satisfying the customer's required date, the system will proceed to notify the user and calculate a best available date as shown in Figure 3 by function block 95. Control of the process then goes to function block 114 in Figure 4.

If material constraints were encountered in the previous steps, lead times for the items required to produce the specified products are forward scheduled from the current day's date to determine the best available date when replenishment orders will satisfy the constraint(s).

Next, the system will proceed to determine if production capacity is available to produce the item(s) in the desired time period.

When the initial request at decision block 70 in Figures 1 and 3 is for the "best available" date, the lead times of required items identified in the netting process are back scheduled through the product structure levels, using the end of the current period, as defined in the MRP system as the end date. If no material constraints are encountered to prohibit producing the required product(s) in the current period, the system will proceed to determine if production capacity is available. If material constraints were encountered in the previous step, lead times for the required items are forward scheduled from the current day's date to calculate a "best available" date. Next, the system will proceed to determine if production capacity is available to produce the item(s) in the desired time period. This process is shown in Figure 4 by blocks 110 to 114.

The system function referred to as Capacity Requirements Planning (CRP) generates data records which reflect the load imposed on production resources by planned production activity. The process of generating this data is shown in Figure 4 by blocks 115 to 117. Having completed the process of determining material availability in the prior steps, the system will proceed to use routing and process data records and planned production load data to determine if the requested item(s) can be produced in the time period indicated by the previous steps, or if in fact a later "best available" date must be calculated. In this step, each element of load, or resource utilization, is added to the cumulative load for the production resource for the affected period, as previously determined by the CRP system. The affected period is determined by back scheduling from the time period indicated by the previous MRP steps, using the time increments provided in the routing and process data records for the requested item(s).

After each element of load, or resource utilization, is added to the cumulative for that element and for that period, then each result of this process is subtracted from the standard capacity established fob that element and for that period. If the result of this subtraction is either zero or a positive number for all elements, then the planned production capacity is available to produce the item(s) during the requested period. If the result is a negative number, the planned capacity does not exist. At this point, the system will begin a decision-making process. To begin this process, the system will examine the results of the previous step to determine if the planned capacity exists to produce the requested item(s) in the required time period. The process for determining if a best available date can be met is shown in Figure 4 by function blocks 114 to 117 and in Figure 5 by function block 118. A test is made in decision block 119 to determine if capacity exists in the required period. If not, the production is incremented in function block 119A and control of the process loops back to function block 116 to determine if the capacity exists in the next period. If, on the other hand, capacity does exist as determined in decision block 119, the system will notify the user (1) that the customer required date can be met, if requested, or (2) that the "best available" date previously calculated by the MRP system can be met. Upon completion of this process, the system will notify the user of the "best available" date(s), as shown in Figure 5 by blocks 121 to 123 and 62 to 64, for the requested item(s). If the original request was made for a customer-required date and it could not be met, the system will automatically notify the user that the customer required date cannot be met and supply the "best avail able" date instead, as shown in Figure 5 by function block

The invention provides the order processing person with an easier way to process customer orders and provide a more accurate and timely response to requests for commitment to delivery date(s). The invention utilizes capabilities to analyze capacity limitations of not only the parent part ordered by the customer, but also the sub-assembly and component items that make up the parent item. This function gives the order processing person added information that is not provided in products currently available in the marketplace. Thus, the system would be designed with necessary function to automatically recommend a promising date as opposed to requiring one or more people going through a time consuming manual process of examining information from several sources for a potential promise date.

## Claims

1. An automated customer order promising and confirming method for implementation on a computer, providing for the customer order promising capability based on user production capacity verification to aid a user in making decisions that will improve a customer order promising process, said method comprising the steps of:

prompting the user to input to the computer customer information and item requirements;

comparing customer item requirements to inventory records stored in said computer;

based on said comparing step, determining if inventory is currently available to meet customer requirements;

if inventory is not currently available and there is a customer specified date for delivery of the item, determining if inventory will be available in planned production of the item;

if inventory will not be available in planned production, using a material requirement planning system, determining net time-phased item requirements against on-hand and on-order inventory;

using a capacity requirements planning system, determining whether user production capacity is available to meet a customer specified date; and

if the customer specified date can not be met, establishing production availability of the item and determining a best available date for delivery of the item to the customer.

2. The automated order promising method as recited in claim 1 wherein the step of using a material requirement planning system and determining net time-phase item requirements comprises the steps of:

performing an explosion of customer requirements using item data stored in said computer;

offsetting requirements by lead times to obtain time-phased requirements for the item; and

netting time-phased requirements against on-hand and on-order inventory of the item.

3. The automated order promising method as recited in claim 2 wherein if material is available for the item, said step of using a capacity requirements planning system and determining whether user production capacity is available comprises the steps of:

determining a load imposed by customer requirements on user production capacity;

adding the load from the customer requirements to cumulative load requirements on user production capacity; and

then subtracting a load determined by said adding step from a predefined user production capacity.

4. The automated order promising method as recited in claim 2 wherein if material is not available for the item, then performing the following steps:

notifying the user that material is not available;

using said time-phased requirements, determining a load imposed by customer requirements on user production capacity;

adding the load from the customer requirements to cumulative load requirements on user production capacity;

then subtracting a load determined by said adding step from a predefined user production capacity;

comparing a difference obtained in said subtracting step with management rules for resource scheduling; and

if capacity exists, compiling best available dates for customer requirements.

5. The automated order promising method as recited in claim 4 further comprising the step of displaying to the user the capability of meeting customer requested dates or system recommended alternate dates.

6. The automated order promising method as recited in claim 4 wherein if capacity does not exist for a given production period of user production capacity, then performing the following steps:

incrementing the production period; and repeating said adding, subtracting and comparing steps to determine if capacity exists for the next production period.

FIG.1

```
                          ┌──────────────┐ 10
                          │   RECEIVE    │
                          │   CHANGE/    │
                          │  NEW ORDER   │
                          └──────┬───────┘
                                 │
                          ┌──────┴───────┐ 20
                          │    ENTER     │
                          │ REQUIREMENTS │
                          └──────┬───────┘
                                 │
                          ┌──────┴───────┐ 30
                          │     NET      │
                          │   AGAINST    │
                          │     INV.     │
                          └──────┬───────┘
                                 │
                            40 ╱ IS ╲        YES    ┌──────────────┐ 50
                             ╱  INV. AVAIL ╲───────▶│   ALLOCATE   │
                             ╲            ╱         │      TO      │
                              ╲        ╱            │   CUSTOMER   │
                                 │                  └──────┬───────┘
                                 │ NO                      │
                                                    ┌──────┴───────┐ 60
      80 ╱ IS ╲                                     │    INFORM    │
       ╱ QTY AVAIL IN ╲                             │   CUSTOMER   │
       ╲  PLANNED     ╱                             │  BASED ON    │
        ╲  PRODN.    ╱                              │  SHIP SCHED. │
  YES      │                                        └──────────────┘
           │ NO
    ┌──────┴───────┐ 90     CUST    70 ╱ IS ╲
    │  DETERMINE   │        DATE    ╱ REQUEST FOR ╲
    │ ITEM  REQMT. │◀──────────────╱ CUST DATE OR BEST ╲
    │  USING MRP & │               ╲     AVAIL       ╱
    │   VERIFY     │                ╲              ╱
    │  WITH CRP    │                     │
    └──────┬───────┘                     │ BEST AVAIL
           │                     110 ┌───┴──────────┐
      ╱ CAN ╲  100  NO              │  ESTABLISH    │
     ╱ CUSTOMER DATE ╲─────────────▶│  PRODUCTION   │
     ╲  BE  MET     ╱               │ AVAILABILITY  │
      ╲           ╱                 └──────┬────────┘
           │ YES                          │
                              ┌───────────┴──┐ 120
                              │  ARRIVE  AT  │
                              │ BEST AVAILABLE│
                              │     DATE     │
                              └──────────────┘
```

# FIG.2

ORDER PROMISING AND CONFIRMING OPTION MENU

___ SIMULATE ENTRY OF NEW ORDER

___ SIMULATE CHANGE TO ORDER No. 123456

___ CALCULATE BEST SHIP DATE

___ CUSTOMER REQUIRED SHIP DATE _____

CUSTOMER NAME _____
CUSTOMER NUMBER_____
PRODUCT No._____
QUANTITY_____

FIG.3

**C** → 96
USING ROUTING AND PROCESS DATA, DETERMINE LOAD IMPOSED BY CUST. ROMTS

→ 97
ADD LOAD (FROM ROMTS) TO CUMULATIVE LOAD ELEMENTS

→ 98
SUBTRACT LOAD STATEMENT FROM STATED CAPACITY BY ELEMENT

→ 100
CAN CUST. DATE BE MET

Y → **A**

N → **E**

"NOTIFY ORDER PROMISING" AND "CALCULATE SYSTEM BEST AVAILABLE DATE"

**B** → 110
PERFORM EXPLOSION OF CUST. ROMTS USING ITEM AND STRUCTURE DATA

→ 111
BACKSCHEDULE USING LEAD TIMES TO DETERMINE TIME-PHASED ROMTS

→ 112
NET ROMTS AGAINST ON-ORDER & ON-HAND

→ 113
IS MATERIAL AVAILABLE

Y →

N → 114
**D** → USING TIME-PHASED ROMTS, FWD. SCHEDULE TO CALC. MATERIAL "BEST AVAILABLE" DATE

→ 115
DETERMINE LOAD IMPOSED BY CUST. ROMTS

→ 116
**G** → ADD LOAD FROM ROMTS TO LOAD FOR PERIOD

→ 117
**F** → SUBRACT RESULTING LOAD FROM STATED CAPACITY FOR PERIOD

## FIG.4

FIG.5